(19) **Europäisches Patentamt / European Patent Office / Office européen des brevets**

(11) **EP 1 788 873 B1**

(12) **FASCICULE DE BREVET EUROPEEN**

(45) Date de publication et mention de la délivrance du brevet:
**16.04.2014 Bulletin 2014/16**

(21) Numéro de dépôt: **05796392.8**

(22) Date de dépôt: **11.08.2005**

(51) Int Cl.:
*A01N 37/16* (2006.01)     *A01N 37/02* (2006.01)
*A01P 1/00* (2006.01)     *A01N 59/00* (2006.01)

(86) Numéro de dépôt international:
**PCT/FR2005/002074**

(87) Numéro de publication internationale:
**WO 2006/021680 (02.03.2006 Gazette 2006/09)**

(54) **PROCEDE DE DECONTAMINATION DE GRAINS**

VERFAHREN ZUR KEIMFREIMACHUNG VON BEEREN

METHOD FOR DECONTAMINATING BERRIES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **13.08.2004 FR 0408869**

(43) Date de publication de la demande:
**30.05.2007 Bulletin 2007/22**

(73) Titulaire: **Moulins Soufflet SA**
**F-10400 Nogent sur Seine (FR)**

(72) Inventeurs:
• **BARET, Jean-Luc, Alain, Guy**
**F-77250 VENEUX LES SABLONS (FR)**
• **ROUILLE, Jocelyn**
**F-91710 VERT LE PETIT (FR)**
• **GAGU, Philippe**
**F-91090 LISSES (FR)**
• **ROBERT, Hugues**
**F-91750 CHAMPCUEIL (FR)**

(74) Mandataire: **Colas, Jean-Pierre**
**Cabinet Lavoix**
**2, Place d'Estienne d'Orves**
**75441 Paris Cedex 09 (FR)**

(56) Documents cités:
**WO-A-01/43556     FR-A- 2 190 365**
**FR-A- 2 474 832     GB-A- 2 257 630**

• **KITIS, MEHMET: "Disinfection of wastewater with peracetic acid: a review", ENVIRONMENT INTERNATIONAL, vol. 30, no. 1, 1 March 2004 (2004-03-01), pages 47-55, ISSN: 0160-4120, DOI: 10.1016/S0160-4120(03)00147-8**

Remarques:
Le dossier contient des informations techniques présentées postérieurement au dépôt de la demande et ne figurant pas dans le présent fascicule.

EP 1 788 873 B1

**Description**

L'invention se rapporte à un procédé de décontamination de grains, notamment de grains de blés, par mise en contact desdits grains avec une solution de décontamination.

La maîtrise des risques sanitaires revêt une importance grandissante dans les industries alimentaires. Dans le cas des industries céréalières, les industriels de la deuxième transformation et les enseignes de la grande distribution ont vis-à-vis de leurs fournisseurs de nouvelles attentes relatives à la maîtrise des contaminations microbiennes des matières premières (blé, maïs, etc.) et des produits qui en sont dérivés (farines, semoules, etc.) afin de limiter le développement de microorganismes susceptibles de nuire à la santé du consommateur ou d'altérer les productions ou la qualité des produits.

Les industries de première transformation (meunerie, maïserie) travaillent des matières premières agricoles sur lesquelles une flore microbienne est naturellement présente.

Ainsi, dans le cas particulier de la meunerie par exemple, la population bactérienne sur les grains de blé peut varier de $10^4$ à $10^8$ cellules/g au moment de la récolte alors que la flore fongique (ou moisissures) est de l'ordre de $10^4$/g.

Classiquement, le blé brut réceptionné subit plusieurs étapes de nettoyage mécanique (épurateur, nettoyeur / séparateur, brosse puis épierreur) afin d'être débarrassé de toutes les impuretés végétales et minérales ainsi que des grains de blé présentant des défauts. A l'issu de ce traitement physique, on obtient ainsi un blé « propre ».

Le blé propre subit ensuite un conditionnement, c'est à dire une préparation à la mouture. Le conditionnement comprend successivement une étape de mouillage et une étape de repos.

Pendant l'étape de mouillage, le blé est mélangé à une quantité d'eau variable en fonction de l'état hydrique du grain de blé réceptionné. Un apport de 15 à 60l eau / t blé est généralement effectué. Pour favoriser le mouillage et limiter le temps de repos subséquent, un mouilleur vibrant, par exemple du type Vibronet®, est de préférence mis en oeuvre.

On laisse alors le blé reposer pendant un temps de repos compris entre 8 heures dans le cas de l'utilisation d'un mouilleur vibrant, et 18 à 24 heures dans la pratique courante, le temps de repos pouvant parfois atteindre 48 heures, par exemple quand le blé est très sec ou très dur. En fin de conditionnement, l'humidité du blé atteint environ 16,5 % (16,5 grammes d'eau pour 100 grammes de grains).

Le blé est alors broyé au cours d'une étape appelée « mouture ». Puis, au cours d'une étape de séparation, le broyat, ou « produit de mouture », est classifié en différentes fractions granulométriques, à savoir « les gros sons », les « fins sons », le « remoulage » et la farine. Les « gros sons », les « fins sons » et le « remoulage » constituent les issues.

L'effet des différentes étapes de traitement du blé en meunerie sur la flore totale est variable selon les étapes. Les étapes de nettoyage des blés diminuent la flore totale d'environ 50 %. Le mouillage du blé et le repos augmentent la flore totale et les moisissures. Enfin, on considère que la mouture et la séparation contribuent à diminuer la contamination des farines, la flore bactérienne se retrouvant principalement dans les issues.

Les industries de première transformation sont cependant confrontées à des exigences croissantes de qualité microbiologique et sanitaire. La recherche de nouvelles techniques de décontamination des grains et/ou des produits de mouture présente donc un intérêt certain pour les industriels de la filière.

Différentes voies ont été explorées :

- Les traitements à la vapeur des grains au cours desquels la condensation en surface provoque une élévation de température produisant un effet de pasteurisation.
- Les traitements thermiques assurés par des vis à passage de courant (Spirajoule®) ou des tubes à passage de courant vibrés, ou, comme décrit dans US 6,086,935, assurés par un chauffage indirect dans une enceinte dans laquelle de la vapeur sur les grains est également injectée.
- Les traitements faisant appel à des rayonnements (Ionisation, microondes, Infrarouge).
- Les traitements basés sur l'utilisation de réactifs chimiques comme l'ozone ou des produits chlorés. WO 01/43566 décrit en particulier un traitement préalable des grains avec de l'ozone.

Tous ces traitements font appel à des équipements spécifiques, comme un réacteur d'ozonation ou un système de traitement thermique, nécessitant de lourds investissements. Ils impliquent également des modifications significatives des installations industrielles en place dans les moulins existants.

D'un point de vue industriel, il est donc intéressant de disposer de solutions de traitement des grains pouvant être mises en oeuvre dans les moulins existants. A cet effet, on a ainsi eu recours à des réactifs chimiques ou à des combinaisons de réactifs chimiques, solubles en phase aqueuse et mis en contact avec les grains lors de l'étape mouillage. Les désinfectants chlorés ont été proposés et utilisés. Ils apportent cependant des quantités significatives de dérivés chlorés dans les produits de mouture, ce qui peut poser des problèmes de sécurité sanitaire.

Il existe donc un besoin pour un procédé de décontamination de blé apte à être mis en oeuvre dans les installations industrielles existantes et ne générant pas de risque sanitaire particulier.

Le but de l'invention est de répondre à ce besoin.

Selon l'invention, on atteint ce but au moyen d'un procédé de décontamination de grains, notamment de grains de blés, par mise en contact desdits grains avec une solution de décontamination, remarquable en ce que ladite solution comporte au moins un agent décontaminant qui est l'acide acétique.

L'agent décontaminant peut être mis en contact avec les grains lors de l'étape de mouillage. Aucune modification importante des installations existantes n'est donc avantageusement nécessaire. A titre de comparaison, on estime que pour une décontamination avec de l'ozone seul, une dose d'ozone comprise entre 5 et 12 kg est nécessaire pour décontaminer efficacement une tonne de blé, pour un coût de traitement d'environ 10 Euros. Bien que le pouvoir d'oxydation de l'acide peracétique soit plus faible que celui de l'ozone (03), la dose équivalente d'acide peracétiques (PAA) est estimée à 0,5 kg / t blé, pour un coût d'environ 1,5 à 2,5 Euros par tonne de blé. Le procédé selon l'invention est donc particulièrement avantageux d'un point de vue économique.

En outre, l'acide acétique est largement utilisé dans les produits alimentaires comme agent de conservation et/ou pour ses propriétés organoleptiques comme condiment. L'acide propionique (hors invention) est également consommé par l'homme en tant qu'additif alimentaire. La présence de faibles quantités d'acide acétique et/ou d'acide propionique (hors invention) dans les produits de mouture ne pose donc pas de problème de sécurité sanitaire.

Le procédé selon l'invention présente en outre, de préférence, les caractéristiques suivantes.

- Ledit agent décontaminant est l'acide acétique.
- Ladite solution de décontamination comporte au moins 0,5 litre, de préférence au moins 1,5 litre, de préférence encore au moins 3 litres dudit agent décontaminant par tonne de grains.
- Ladite solution de décontamination comporte en outre un agent oxydant, de préférence choisi parmi l'acide peracétique, le peroxyde d'hydrogène et un mélange de ceux-ci.
- La quantité d'acide peracétique est supérieure à 0,06 l/tonne de grains, de préférence supérieure à 0,15 l/tonne de grains, de préférence encore supérieure à 0,3 l/tonne de grains, et/ou inférieure à 0,6 l/tonne de grains, de préférence inférieure à 0,5 l/tonne de grains, afin de limiter les coûts et les odeurs.La quantité totale des agents décontaminants autres que l'acide peracétique est alors de préférence supérieure ou égale à 0,3 l/tonne de blé, de préférence 1,2 l/tonne de blé, de préférence encore 1,5 l/tonne de blé. On considère qu'une dose d'acide peracétique de 0,45 l/tonne de grains est optimale.
- La quantité de peroxyde d'hydrogène est supérieure à 0,5 l/tonne de grains.
- En outre, pour améliorer la décontamination, lesdits grains sont de préférence mis en contact avec de l'ozone. De préférence ladite solution de décontamination comporte de l'ozone solubilisé.
- Ladite solution de décontamination est une solution de mouillage constituée d'eau et dudit agent décontaminant, de préférence mélangée au grain à raison de 3 litres par tonne de grains à décontaminer.
- La concentration dudit agent décontaminant dans ladite solution de mouillage est supérieure à 5%, de préférence supérieure à 8 %, et/ou inférieure à 20%, de préférence inférieure à 15%, en pourcentages en poids.
- Lesdits grains et ladite solution de décontamination sont maintenus en contact pendant une durée supérieure ou égale à 8 heures. Avantageusement, la solution de décontamination exerce alors une double fonction de décontamination et de préparation au broyage. Le procédé selon l'invention permet avantageusement une amélioration de la qualité de la farine et des issues.

On considère que la surface extérieure moyenne des grains d'une tonne de blé BPMF (Blé panifiable meunier français) est d'environ 140 m$^2$. Les données fournies en l/tonne peuvent donc être converties en ml/m$^2$ de surface des grains par une division par 0,140.

En conséquence, selon des caractéristiques préférentielles du procédé selon l'invention :

- Ladite solution de décontamination comporte au moins 3,6 millilitres, de préférence au moins 10,7 millilitres, de préférence encore au moins 21,4 millilitres dudit agent décontaminant par mètre carré de surface extérieure desdits grains ;
- La quantité d'acide peracétique est supérieure à 1,1 ml/m$^2$, de préférence 2,1 ml/m$^2$ de grains, et/ou inférieure à 4,3 ml/m$^2$ de surface extérieure desdits grains. La quantité totale des agents décontaminants autres que l'acide peracétiques est alors de préférence supérieure ou égale à 2,1 ml/m$^2$, de préférence 8,6 ml/m$^2$, de préférence encore 10,7 ml/m$^2$ de surface extérieure desdits grains. On considère qu'une dose d'acide peracétique de 3,2 ml/m$^2$ de surface extérieure desdits grains est optimale.

Sauf mention contraire, tous les pourcentages sont des pourcentages massiques.

L'utilisation d'acide acétique dilué dans l'eau de mouillage des blés (environ 30 l d'une solution aqueuse à 10 % d'acide acétique par tonne de blé) se traduit par une humidité moyenne de la masse de grain comprise entre 15 et 18 %. Elle se révèle efficace pour réduire la contamination microbienne des grains.

Au cours de l'étape de repos qui suit classiquement l'étape de mouillage, les peracides de la solution de décontamination se décomposent pour leur majeure partie. Par exemple, dans des conditions de mouillage et de repos d'un process classique meunier, le temps de demi-vie de l'acide, peracétique (PAA) est d'environ 30 minutes, tandis que les temps de repos après mouillage varient de 8 heures à 24 heures, soit 16 à 48 fois le temps de demi-vie. La quantité de résidus de peracide est donc extrêmement faible dans les issues et indétectable dans la farine selon les techniques de détection actuelles. Avantageusement, le goût des farines n'est donc pas modifié par le procédé selon l'invention.

On a pu constater que l'élévation d'humidité résultant du conditionnement est essentiellement localisée dans les enveloppes des grains. L'action de décontamination reste donc localisée à la surface des grains où la concentration locale en acide est très supérieure à celle à l'intérieur des grains. Après broyage des grains, les agents de décontamination sont donc répartis de manière hétérogène entre la farine et les issues, la teneur en agent de décontamination dans la farine étant très inférieure à la teneur moyenne théorique d'une répartition homogène. Avantageusement, la composition de la farine, généralement destinée à la consommation humaine, est donc peu modifiée par le procédé selon l'invention.

La teneur des issues en agents de décontamination est de l'ordre de 10 fois celle de la farine. Avantageusement, cette teneur élevée améliore les conditions de conservation des issues et, pour ce qui concerne les issues utilisées dans l'alimentation animale, présente l'intérêt d'un moindre recours à des antibiotiques.

Pour augmenter le pouvoir de décontamination de la solution de décontamination, elle contient au moins un agent oxydant comme l'acide peracétique, le peroxyde d'hydrogène, ou une combinaison d'acide peracétique et de peroxyde d'hydrogène. Avantageusement, les produits de décomposition de ces agents oxydants sont compatibles avec une utilisation alimentaire.

En présence d'eau, l'acide peracétique s'hydrolyse en acide acétique et en peroxyde d'hydrogène selon la réaction (1) suivante.

$$(1) \qquad CH_3CO\text{-}O\text{-}OH + H_2O \rightarrow CH_3\text{-}CO\text{-}OH + H_2O_2$$

Le peroxyde d'hydrogène se décompose en eau et en oxygène selon la réaction (2) suivante.

$$(2) \qquad H_2O_2 \rightarrow H_2O + \tfrac{1}{2}\,O_2$$

Classiquement, pour améliorer la qualité boulangère de la farine, en particulier la consistance de la pâte, on ajoute un agent oxydant dans la farine au moment de la préparation de la pâte. L'ajout d'un agent oxydant dans la solution de décontamination limite la quantité d'agent oxydant à ajouter dans la pâte et réduit donc le coût de sa fabrication.

On peut également utiliser l'ozone comme agent oxydant additionnel.

L'action de l'ozone est avantageusement renforcée par l'acidification des grains résultant de leur mouillage avec la solution de décontamination selon l'invention.

En outre, l'ozone réagit avec l'acide acétique selon la réaction (3) suivante pour former de l'acide peracétique dont l'action décontaminante est complémentaire à celle de l'acide acétique :

$$(3) \qquad CH_3CO\text{-}OH + O_3 \rightarrow CH_3CO\text{-}O\text{-}OH + O_2$$

Pour traiter les grains à l'ozone, il est cependant nécessaire de disposer d'un ozoneur.

L'ozone peut être appliqué par voie gazeuse ou liquide. De préférence, l'ozone est solubilisé dans la solution aqueuse d'acide(s) utilisée pour le mouillage des grains.

Enfin, la combinaison des acides acétique et/ou propionique d'une part et de l'ozone d'autre part permet de diminuer la quantité d'ozone nécessaire pour la décontamination. Avantageusement, le coût de traitement en est réduit.

Des prélèvements d'échantillons de blé BPMF (Blé panifiable meunier français) ont été effectués sur une installation industrielle, après l'étape de premier nettoyage. Le blé est alors débarrassé de toutes impuretés et a une humidité proche de 13 %.

Le blé est alors mouillé par mélange avec 3 % d'une solution aqueuse (30 ml par kg de blé) contenant éventuellement un ou plusieurs acides.

Les acides suivants ont été utilisés :

- acide acétique de laboratoire RP Normapur 100% commercialisé par la société Prolabo,
- acide propionique (hors invention) 98% commercialisé par la société Prolabo,
- acide acétique industriel Brenntag® 80%,
- acide peracétique de laboratoire (pureté 40 %) commercialisé par la société VWR international,
- acide peracétique industriel Solvay concentration 5 % : Proxitane 5®,

* acides peracétiques industriels Solvay concentration 15% : Proxitane 15® et Proxitane 15L®.

Le mélange est effectué par agitation manuelle pendant quelques minutes de bidons dans lesquels ont été introduits le blé et la solution aqueuse. Les bidons, fermés, sont alors mis en rotation à une vitesse de 20 tours par minutes pendant 24 heures au moyen d'un conditionneur de mouillage afin de simuler l'étape de repos en meunerie industrielle.

Puis des échantillons de blé sont prélevés afin de subir des analyses microbiologiques et évaluer l'efficacité de la décontamination.

Le blé est écrasé à l'aide d'un moulin d'essai Brabender® modèle Senior pendant environ 45 minutes, avec un rendement de 70 %. On appelle « rendement le rapport de la quantité de farine obtenue après broyage sur la quantité de grains mise en oeuvre.

Un nettoyage du moulin d'essai est réalisé entre chaque mouture. La farine est ensuite séparée des issues, puis des échantillons de farine sont prélevés afin de subir des analyses microbiologiques et évaluer l'effet de la décontamination des grains sur la qualité sanitaire de la farine.

Les contrôles de la qualité microbiologique des blés et des produits de mouture ont été effectués conformément aux normes suivantes:

* flore totale: Norme ISO 7698

* Coliformes fécaux: Norme Afnor NF V 08 017

Pour chaque test, une solution mère est préparée par dilution d'une prise d'essai de l'échantillon à tester dans un diluant (tryptone sel) stérile (préalablement soumis pendant 15 min à 121 °C). Avant d'effectuer la dilution, l'échantillon et le diluant sont à température ambiante. Ils sont ensuite mis en contact pendant 30 min dans un sac Stomacher® dans des conditions stériles.

Les compositions des solutions mères sont fournies par le tableau 1 suivant.

Tableau 1 : Préparation d'une solution mère à base de grains ou de farine.

| Prise d'essai | Echantillon | Diluant |
|---|---|---|
| 40 grammes | Blé | 360 ml |
| 20 grammes | Farine | 180 ml |

La solution mère est homogénéisée à l'aide du Stomacher®, 2 fois 30 secondes pour les grains et 2 fois 60 secondes pour la farine. La mise en solution de l'échantillon constitue une dilution $10^{-1}$.

Dans un tube contenant 9 ml de diluant stérile, on ajoute 1 ml de solution mère pour obtenir une dilution $10^{-2}$, puis on homogénéise au vortex ou par refoulement. On effectue alors des dilutions en cascade jusqu'à obtenir les dilutions données dans le tableau 2.

Tableau 2 : dilutions pour les analyses microbiologiques blé et farine.

| Microorganismes | Blé | Farine |
|---|---|---|
| Flore totale | $10^{-4}$ et $10^{-5}$ | $10^{-2}$ et $10^{-3}$ |
| Levures et moisissures | $10^{-2}$ et $10^{-3}$ | $10^{-1}$ et $10^{-2}$ |
| coliformes totaux | $10^{-3}$ et $10^{-4}$ | $10^{-3}$ et $10^{-4}$ |
| coliformes fécaux | $10^{-1}$ | $10^{-1}$ |

La mise en solution de l'échantillon et la préparation des dilutions sont effectuées à proximité d'un bec Bunsen.

Sur une paillasse propre et décontaminée, on dispose les tubes de dilution et les boîtes de pétri stériles. Pour chaque dilution, deux boîtes de pétri sont ensemencées pour doubler chaque résultat, et identifiées (référence de l'échantillon, nature du milieu et dilution). Une boîte supplémentaire est prévue pour les différents milieux afin de laisser incuber une boîte témoin, contenant le milieu seul dans les mêmes conditions que les boîtes contenant les échantillons (test de stérilité du milieu).

Les milieux utilisés sont des milieux prêt-à-l'emploi (flacon 200ml) commercialisés par AES laboratoire (Combourg - France).

La flore totale est dénombrée sur PCA, en anglais « Plate Count Agar », les levures et moisissures sur YGC en anglais « Yeast Glucose Chloramphénicol », et les Coliformes sur VRBL ou « gélose lactosée au cristal violet, rouge neutre, et à la bile ». Le milieu de dilution est le triptone sel.

A l'aide de la pipette paille, on dispose 1 ml de la dilution appropriée dans chacune des boîtes, sauf dans les boîtes témoins. On verse ensuite dans chacune des boîtes environ 20 ml de milieu refroidi à 45°C (les milieux gélosés ayant été préalablement régénérés dans un bain marie bouillant) et on homogénéise légèrement. Lorsque le milieu est solidifié, on retourne les boîtes sur leur couvercle.

Ce mode opératoire est commun aux trois milieux gélosés, à l'exception du VRBL qui nécessite une étape supplémentaire. Lorsque le milieu VRBL est solidifié, une seconde couche de gélose est coulée (5 ml). Après solidification du milieu, les boîtes sont retournées. Les boîtes sont alors mises en incubation pendant une durée et à une température données par le tableau 3 suivant.

Tableau 3 : Températures et temps d'incubation des différents microorganismes.

| Microorganismes | Temps d'incubation | Température |
|---|---|---|
| flore totale | 72h | 30°C |
| levures et moisissures | 3 et 5 jours | 25°C |
| coliformes totaux | 24h | 30°C |
| coliformes fécaux | 24h | 44,5°C |

Les colonies sont ensuite dénombrées avec un stylo compte colonies sur boite entière. Pour les milieux YGC et PCA, un maximum de 300 colonies par boite est toléré. Pour le milieu VRBL, un maximum de 150 colonies par boite est toléré. Au-delà de ces seuils, on considère que la dilution n'est pas suffisante et la boite est rejetée.

Classiquement, le nombre de microorganismes par gramme d'échantillon se calcule à l'aide de la formule suivante :

$$C / ((n1 + 0,1*n2) * d)$$

dans laquelle

- C est la somme des colonies comptées sur toutes les boites et retenues au niveau de deux dilutions successives ;
- d est le taux de la première dilution, le taux de la deuxième dilution étant égal à 0,1*d;
- n1 : nombre de boîtes comptées et retenues à la première dilution ;
- n2 : nombre de boîtes comptées et retenues à la seconde dilution.

Par exemple,

| Taux de dilution | Colonies comptées (2 boites comptées à chaque dilution) |
|---|---|
| Première dilution : $10^{-3}$ | 55 et 33 colonies |
| Deuxième dilution : $10^{-4}$ | 6 et 5 colonies |

$$(55+33+6+5)/ (2 + 2*0,1)*10^{-3} = 45\ 000 \text{ microorganismes par gramme d'échantillon}$$

Les tableaux suivants présentent les résultats obtenus.

Les abréviations suivantes sont employées :

- FT : dénombrement de la flore totale ;
- CT : dénombrement des Conformes totaux ;
- LM : dénombrement des levures et moisissures ;
- Cm : concentration du produit incorporé dans l'eau de mouillage ;

- AA : teneur en acide acétique pur ;
- PAA : teneur acide peracétique pur ;
- R : Taux de réduction.

Les résultats sont exprimés en Unités Formant Colonie (UFC) / g.

A travers ces résultats, il peut sembler que l'effet décontaminant n'est pas toujours linéaire en fonction de la dose et que des variations importantes de niveaux de contaminations peuvent apparaître. Ces observations peuvent s'expliquer pour plusieurs raisons :

- Le mouillage est réalisé manuellement ce qui entraîne automatiquement des variations au niveau de l'homogénéité d'application du produit sur le blé.
- L'hétérogénéité des prélèvements de blés ou les recontaminations éventuelles lors des manipulations.
- La précision des dosages microbiologiques est de l'ordre de 0,5 à 1 log. L'erreur de mesure est d'autant plus importante que la contamination est élevée.
- La contamination du blé de départ fluctue (paramètre non maîtrisable) ce qui peut entraîner des écarts d'efficacité observés d'une série à l'autre.

Pour ces différentes raisons, les essais ont été quasi-systématiquement répétés et les dénombrements doublés pour chaque essai (deux ensemencements).

Les exemples 1 à 3 (hors invention) concernent des tests effectués sur des blés au moyen d'un mouillage au moyen d'une solution aqueuse d'acide acétique.

Exemple 1

Tableau 3 : Effet de l'ajout d'acide acétique de laboratoire (0,3 à 12 l/tonne de blé) sur la contamination microbiologique d'un blé

| Ac. acétique labo | Cm | AA | | | | | | |
|---|---|---|---|---|---|---|---|---|
| | | (ml/t blé) | **FT** | **R** | **CT** | **R** | **LM** | **R** |
| blé mouillé | | | 1 340 000 | | 165 000 | | 1400 | |
| blé mouillé traité | 1% | 300 | 1 100 000 | **1** | 150 000 | **1** | 1400 | **1** |
| | 2% | 600 | 1 100 000 | **1** | 56 000 | **3** | 500 | **3** |
| | 5% | 1500 | 330 000 | **4** | 15 000 | **11** | 3000 | **0** |
| | 10% | 3000 | 30 000 | **45** | 3 700 | **45** | 14 | **100** |
| | 20% | 6000 | 11 000 | **122** | 80 | **2063** | 8 | **175** |
| | 40% | 12000 | 4 000 | **335** | 80 | **2063** | 8 | **175** |

L'exemple 1 démontre qu'au delà d'une concentration de 5 % dans l'eau de mouillage, l'acide acétique entraîne des taux de réduction supérieurs à 4 pour la flore totale, à 10 pour les coliformes totaux et à 3 pour les levures et moisissures. On constate que l'application d'une dose de 10% d'acide acétique permet d'obtenir des réductions comprises entre 45 et 100 selon les flores considérées. De tels facteurs de réduction sont beaucoup plus élevés que ceux obtenus au moyen des techniques de nettoyage actuellement en place dans les meuneries.

Exemple 2

Tableau 4 : Effet de l'ajout d'acide acétique de laboratoire (1,5 à 3L/T blé) sur la contamination microbiologique d'un blé.

| Ac. acétique labo | Cm | AA | | | | | | |
|---|---|---|---|---|---|---|---|---|
| | | (ml/t blé) | **FT** | **R** | **CT** | **R** | **LM** | **R** |
| blé mouillé | | | 1 030 000 | | 27 000 | | 100 | |

(suite)

| Ac. acétique labo | Cm | AA | | | | | | |
|---|---|---|---|---|---|---|---|---|
| | | (ml/t blé) | FT | R | CT | R | LM | R |
| Blé mouillé traité | 3% | 900 | 1 700 000 | 1 | 82 000 | 0 | 70 | 1 |
| | 5% | 1500 | 210 000 | 5 | 17 000 | 2 | 80 | 1 |
| | 6% | 1800 | 70 000 | 15 | 7 500 | 4 | 10 | 10 |
| | 8% | 2400 | 23 000 | 45 | 900 | 30 | 8 | 13 |
| | 10% | 3000 | 8600 | 120 | 1100 | 25 | 8 | 13 |

L'exemple 2 permet d'affiner l'évaluation de l'efficacité des doses comprises entre 5 et 10%. Elle confirme que pour des doses comprises entre 8 et 10%, on obtient des taux de réduction très satisfaisants à savoir environ 100 sur la flore totale, 25-30 sur les coliformes totaux et >10 pour les levures et moisissures.

Exemple 3

Tableau 5 : Effet de l'ajout d'un acide acétique commercial (1,5 à 3 l/t) sur la contamination microbiologique d'un blé

| Acétique Brenntag | | AA | | | | | | |
|---|---|---|---|---|---|---|---|---|
| | | (ml/t blé) | FT | R | CT | R | LM | R |
| blé mouillé | | | 1 180 000 | | 3 200 000 | | 277 | |
| blé mouillé traité | 6,25% | 1500 | 283 000 | 4 | 46 000 | 70 | <10 | >27 |
| | 10% | 2400 | 67 000 | 18 | 2500 | 1280 | <10 | >27 |
| | 12,5% | 3000 | 1800 | 656 | 45 | 71111 | <10 | >27 |

L'exemple 3 illustre l'effet comparable obtenu avec un acide acétique commercial. On constate que les taux de réduction sont encore plus élevés que précédemment, ce qui pourrait s'expliquer du fait que les niveaux de contamination initiaux étaient également plus forts notamment en coliformes totaux et levures/moisissures). Pour le traitement à 3l/t, on obtient donc des niveaux de flores proches de ceux du produit de laboratoire.

Les exemples 4 à 6 (hors invention) concernent des tests effectués sur des farines obtenues par moulure de grains de blé mouillés au moyen d'une solution aqueuse d'acide acétique.

Exemple 4

Tableau 6 : Effet de l'ajout d'acide acétique de laboratoire sur la contamination microbiologique d'une mouture d'essai, l'acide acétique étant ajouté au mouillage (série 1)

| Ac. acétique labo | Cm | AA | | | | | | |
|---|---|---|---|---|---|---|---|---|
| | | (ml/t blé) | FT | R | CT | R | LM | R |
| blé mouillé | | | 814000 | | 80000 | | 214 | |
| farine témoin | | | 16500 | | 12400 | | 92 | |
| farines traitées | 4% | 1200 | 13500 | 1 | 4000 | 3 | 54 | 2 |
| | 6% | 1800 | 3000 | 6 | 3400 | 4 | <10 | >9 |

(suite)

| Ac.acétique labo | Cm | AA | | | | | | |
|---|---|---|---|---|---|---|---|---|
| | | (ml/t blé) | **FT** | **R** | **CT** | **R** | **LM** | **R** |
| | 7% | 2100 | 30 | **550** | 660 | **19** | 30 | **3** |
| | 8% | 2400 | 16900 | **1** | 1500 | **8** | <10 | **>9** |
| | 10% | 3000 | 1500 | **11** | 2100 | **6** | 15 | **6** |

Exemple 5

Tableau 7 : Effet de l'ajout d'acide acétique de laboratoire sur la contamination microbiologique d'une mouture d'essai, l'acide acétique étant ajouté au mouillage (série 2)

| Ac. acétique labo | Cm | AA | | | | | | |
|---|---|---|---|---|---|---|---|---|
| | | (ml/t blé) | **FT** | **R** | **CT** | **R** | **LM** | **R** |
| blé mouillé | | | 2800000 | | 133000 | | 1200 | 1200 |
| farine témoin | | | 107000 | | 3000 | | 430 | |
| farines traitées | 6% | 1800 | 17300 | **6** | 800 | **4** | 55 | **8** |
| | 8% | 2400 | 10000 | **11** | 260 | **12** | 30 | **14** |
| | 10% | 3000 | 3000 | **36** | 130 | **23** | 56 | **8** |
| | 15% | 4500 | 800 | **134** | <10 | **>300** | 62 | **7** |

Cette seconde série de résultats sur farine révèle des taux de réduction supérieurs à 10 pour des doses d'acide acétique comprises entre 2,4 et 3l/t blé quelle que soit la flore considérée. Bien que le blé de départ soit assez fortement contaminé, le procédé selon l'invention permet donc de fabriquer des farines de qualité microbiologique satisfaisante.

Exemple 6

Tableau 8 : Effet de l'ajout au mouillage d'acide acétique industriel sur la contamination microbiologique d'une mouture d'essai

| Acide acétique Brenntag | | AA | | | | | | |
|---|---|---|---|---|---|---|---|---|
| | | (ml/t blé) | **FT** | **R** | **CT** | **R** | **LM** | **R** |
| blé mouillé | | | 941 000 | | 23 000 | | 860 | |
| farine témoin | | | 32 000 | **29** | 1 250 | **18** | 830 | **1** |
| farine traitée | 12,5% | 3000 | 90 | **10456** | <100 | **> 230** | 30 | **29** |

L'exemple 6 confirme qu'une dose de 3 litres d'acide acétique par tonne de grains avec un acide acétique commercialisé par la société Brenntag est particulièrement préférable. Une concentration de 8 à 10% d'acide acétique dans l'eau de mouillage convient donc pour obtenir une contamination résiduelle de la farine très faible, quelle que soit la contamination initiale du blé.

Exemple hors invention 7

L'exemple hors invention 7 concerne des tests effectués sur des farines obtenues par moulure de grains de blé mouillés au moyen d'une solution aqueuse d'acide acétique et d'acide propionique. L'association de ces deux acides a été testée au moyen d'un plan d'expérience (plan centré composite $2^2$).

Tableau 9: Effet de l'ajout de mélanges acide acétique/ acide propionique sur la contamination microbiologique d'une farine

| a.acétique (% dans eau de mouillage) | a.propionique (% dans eau de mouillage) | FT | LM | CT | Coliformes Fécaux |
|---|---|---|---|---|---|
| | **Témoin** | **260000** | **1500** | **13000** | **2000** |
| 0,75 | 0,75 | 87000 | 260 | 5900 | 440 |
| 0,4 | 0,4 | 52000 | 1400 | 8600 | 640 |
| 1,1 | 0,4 | 40000 | 220 | 8200 | 190 |
| 0,75 | 0,75 | 60000 | 290 | 24000 | 0 |
| 0,4 | 1,1 | 36000 | 330 | 15000 | 480 |
| 1,1 | 1,1 | 130000 | 390 | 61000 | 30 |
| 0,75 | 0,75 | 42000 | 370 | 24000 | 110 |
| 0,25 | 0,75 | 28000 | 140 | 9100 | 1100 |
| 1,24 | 0,75 | 50000 | 160 | 19000 | 0 |
| 0,75 | 0,75 | 21000 | 180 | 13000 | 25 |
| 0,75 | 0,25 | 50000 | 830 | 26000 | 0 |
| 0,75 | 1,24 | 25000 | 210 | 14000 | 85 |
| 0,75 | 0,75 | 39000 | 450 | 19000 | 0 |
| | **Moyenne traitements** | **51000** | **400** | **19000** | **240** |
| | **Réduction** | **5** | **4** | **1** | **8** |

Les résultats de l'exemple 7 montrent un effet décontaminant avec des doses comprises entre 0,4 et 1,25 % de chaque produit, en pourcentages en poids dans l'eau de mouillage. Les réductions observées sont comprises entre un facteur 5 et 10 pour la flore totale, les levures/moisissures et les coliformes fécaux. Aucune réduction n'est observée en moyenne sur les coliformes totaux. L'analyse statistique de cet exemple indique en outre que l'acidification via ces deux acides est efficace pour diminuer l'état global de contamination de la farine, que l'acide propionique possède une activité microbienne significative sur les levures et moisissures, la flore totale et les coliformes totaux, alors que l'acide acétique contribue à réduire de façon significative le niveau de coliformes thermotolérants de la farine.

Les exemples 8 à 11 concernent des tests effectués sur des blés traités par mouillage au moyen d'une solution aqueuse d'acide acétique et d'un oxydant, en l'occurrence l'acide peracétique.

Exemple 8

Deux acides de laboratoire ont été utilisés. Le tableau suivant montre l'effet dose de l'acide peracétique ajouté à une dose fixe d'acide acétique.

Tableau 10: Effet de l'ajout de mélanges acide acétique/ acide peracétique sur la contamination microbiologique d'un blé

| | AA labo | PAA labo | Cm AA (ml/t blé) | PAA (ml/t blé) | FT | R | CT | R | LM | R |
|---|---|---|---|---|---|---|---|---|---|---|
| Blé mouillé | | | | | 288 000 | | 22 000 | | 5500 | |
| Blé mouillé traité | 5% | 0% | 1500 | 0 | 284 000 | **1** | 17 500 | **1** | <10 | **>550** |
| | 5% | 0,5% | 1500 | 60 | 14 000 | **21** | 620 | **35** | 10 | **550** |
| | 5% | 1,0% | 1500 | 120 | 21 000 | **14** | 6 100 | **4** | 10 | **550** |
| | 5% | 1,5% | 1500 | 180 | 1 500 | **192** | 150 | **147** | <10 | **>550** |
| | 5% | 2,0% | 1500 | 240 | donnée manquante | | 5600 | **4** | <10 | **>550** |

Ces résultats montrent que globalement, l'ajout d'acide peracétique à une dose fixe d'acide acétique améliore l'effet décontaminant de celui-ci puisqu'à 1500 ml/t blé, l'acide acétique a un effet bactéricide quasi-nul alors qu'en présence d'acide peracétique, on peut observer des réductions d'un facteur 15 à 200 pour la flore totale et les coliformes totaux et d'un facteur supérieur à 500 pour les levures et moisissures.

Exemple hors invention 9

Dans cet exemple hors invention, l'effet d'un acide peracétique de laboratoire concentré, utilisé seul, a été estimé.

Tableau 11 : Effet de l'ajout d'acide peracétique de laboratoire sur la contamination microbiologique d'un blé

| Acide péracétique 40% | | PAA | | | | | | |
|---|---|---|---|---|---|---|---|---|
| | Cm | (ml/t blé) | FT | R | CT | R | LM | R |
| blé mouillé | | | 288 000 | | 22 000 | | 5500 | |
| Blé mouillé A | 2% | 240 | 56 000 | **5** | 11 600 | **2** | 36 | **153** |
| | 5% | 600 | 18 000 | **16** | 8500 | **3** | <10 | **>550** |

L'effet observé sur la flore totale est remarquable. L'effet sur les coliformes totaux et sur tes levures et moisissures est cependant réduit et beaucoup plus faible qu'en présence d'une quantité, même limitée, d'acide acétique (voir exemple 8).

Exemple 10

Afin d'évaluer une dose optimale décontaminante sur blé, un acide peracétique industriel de la société Solvay, le Proxitane 5 ®, a été utilisé. Le Proxitane 5 ® contient déjà de l'acide acétique.

Tableau 12 : Effet de l'ajout d'acide peracétique Proxitane 5® sur la contamination microbiologique d'un blé

| proxitane 5 | Cm | PAA | Acétique | H2O2 | | | | | | |
|---|---|---|---|---|---|---|---|---|---|---|
| | | ml/t blé | ml/t blé | ml/t blé | FT | R | CT | R | LM | R |
| blé mouillé | | | | | 1 180 000 | | 320 000 | | 280 | |
| blé mouillé A | 2% | 30 | 60 | 120 | 600 000 | **2** | 137 000 | **2** | 35 | **8** |
| | 5% | 75 | 150 | 300 | 300 000 | **4** | 105000 | **3** | 77 | **4** |
| | 10% | 150 | 300 | 600 | 150 000 | **8** | 90 000 | **4** | 14 | **20** |
| | 20% | 300 | 600 | 1200 | 22 000 | **54** | 45 000 | **7** | <10 | **>28** |

(suite)

| proxitane 5 | Cm | PAA | Acétique | H2O2 | | | | | | |
|---|---|---|---|---|---|---|---|---|---|---|
| | | ml/t blé | ml/t blé | ml/t blé | **FT** | **R** | **CT** | **R** | **LM** | **R** |
| | 40% | 600 | 1200 | 2400 | 14 000 | **84** | 1500 | **213** | <10 | **>28** |

Ces résultats confirment l'effet désinfectant des préparations d'acide peracétique. De plus, ils mettent en évidence des réductions significatives pour des concentrations d'acide peracétique comprises entre 150 et 600 ml/t blé et des concentrations d'acide acétique comprises entre 300 et 1200 ml/t blé.

Exemple 11

Les essais sur blé ont été poursuivis en évaluant une autre préparation d'acide peracétique plus concentrée (15%) : Le Proxitane 15L®. Cette composition présente un niveau d'acide acétique plus faible qui celui du Proxitane 5®. Avantageusement, on constate que les volumes utilisés peuvent être réduits.

Tableau 13: Effet de l'ajout d'acide peracétique Proxitane 15L® sur la contamination microbiologique d'un blé

| proxitane 15L | Cm | PAA | Acétique | H2O2 | | | | | | |
|---|---|---|---|---|---|---|---|---|---|---|
| | | ml/t blé | ml/t blé | ml/t blé | **FT** | **R** | **CT** | **R** | **LM** | **R** |
| blé mouillé | | | | | 127950 | | 15150 | | 180 | |
| Blé mouillé A | 5% | 225 | 255 | 345 | 50000 | **3** | 11350 | **1** | <10 | **>18** |
| | 8% | 360 | 408 | 552 | 1000 | **128** | 380 | **40** | <10 | **>18** |
| | 10% | 450 | 510 | 690 | 5800 | **22** | 820 | **18** | <10 | **>18** |
| | 13% | 585 | 663 | 897 | <1000 | **>100** | <100 | **>100** | <10 | **>18** |
| | 16% | 720 | 816 | 1104 | <1000 | **>100** | <100 | **>100** | <10 | **>18** |
| | 20% | 900 | 1020 | 1380 | <1000 | **>100** | <100 | **>100** | <10 | **>18** |

On peut constater qu'à partir d'une concentration de 8% dans l'eau de mouillage (360 ml/t blé de PAA), la décontamination observée sur blé est très significative quelle que soit la flore microbienne.
L'exemple 12 concerne des tests effectués sur des farines de blés obtenues à partir de blés mouillés au moyen d'une solution aqueuse d'acide acétique et d'acide peracétique.

Exemple 12

Les essais ont été réalisés avec le Proxitane 15L® à une dose de 3l/t de blé (10% de l'eau de mouillage). Deux séries d'essais ont été effectués sur 2 blés différents.
1ère série

| proxitane 15L | Cm | PAA | Acétique | H2O2 | | | | | | |
|---|---|---|---|---|---|---|---|---|---|---|
| | | (ml/t blé) | (ml/t blé) | (ml/t blé) | **FT** | **R** | **CT** | **R** | **LM** | **R** |
| blé mouillé | | | | | 940909 | | 22955 | | 859 | |
| farine témoin | | | | | 32273 | | 1250 | | 833 | |
| farine traitée | 10% | 450 | 510 | 690 | 1351 | **24** | 364 | **3** | 1184 | **1** |

2ème série

Tableau 14: Effet de l'ajout au mouillage d'acide peracétique Proxitane 15L® sur la contamination microbiologique d'une farine

| proxitane 15L | Cm | PAA | Acétique | H2O2 | | | | | | |
|---|---|---|---|---|---|---|---|---|---|---|
| | | ml/t blé | ml/t blé | ml/t blé | **FT** | **R** | **CT** | **R** | **LM** | **R** |
| blé mouillé | | | | | 52380 | | <1000 | | 380 | |
| farine témoin | | | | | 3500 | | 1000 | | 368 | |
| farine traitée | 10% | 450 | 510 | 690 | 5454 | **1** | 3500 | **0,3** | 86 | **4** |

Ces résultats montrent que la farine, du fait de l'élimination des enveloppes externes, permet l'obtention d'une farine moins contaminée que le blé. La 1 ère série indique que la farine obtenue avec le mouillage acide est significativement moins chargée (Flore totale et Coliformes totaux) que celle obtenue avec un mouillage classique. La 2éme série ne révèle pas de différences entre les 2 farines. Ceci peut s'expliquer d'une part par l'incertitude de mesure (1 log) mais aussi du fait que le blé de départ possède une contamination microbienne relativement faible.

Les essais ci-dessus démontrent donc que l'acide peracétique ajouté lors du mouillage des blés (3l de Proxitane 15L ® / t blé) permet une décontamination microbienne très significative de ces derniers. Cet effet se confirme sur les farines correspondantes lorsque les blés possèdent une contamination microbienne normale ($10^5$-$10^6$ en flore totale et $10^3$-$10^4$ en coliformes totaux).

L'exemple hors invention 13 concerne des essais effectués sur des blés BPMF de 2003 mouillés au moyen d'une solution aqueuse d'acide propionique seule (essais 1 à 5) et au moyen d'une solution aqueuse contenant un mélange d'acide propionique et d'acide acétique (essais 6 à 10). Le blé étant très sec, la quantité de liquide de mouillage était de 40 l par tonne de grains.

**Exemple 13** <u>(hors invention)</u>

Tableau 15: Effet de l'ajout au mouillage d'acide propionique (essais 1 à 5) et d'un mélange d'acide propionique et d'acide acétique (essais 6 à 10) sur la contamination microbiologique de blé BPMF 2003.

| Test | A. proprion. | | A. acétique | | FT | R | CT | R | CF | LM | R |
|---|---|---|---|---|---|---|---|---|---|---|---|
| | % | ml par t blé | % | ml par t blé | | | | | | | |
| 1 | 0 | 0 | 0 | 0 | 1 000 000 | | 284 000 | | 280 | 460 | |
| 2 | 2 | 800 | 0 | 0 | 2 220 000 | 0 | > 300 000 | 0 | 575 | 3270 | 0 |
| 3 | 5 | 2 000 | 0 | 0 | 266 000 | 4 | 20 000 | 14 | 405 | 70 | 7 |
| 4 | 10 | 4 000 | 0 | 0 | 28 200 | 35 | 510 | 557 | <10 | 30 | 15 |
| 5 | 15 | 6 000 | 0 | 0 | 1500 | 667 | <10 | >28 000 | <10 | <10 | >46 |
| 6 | 2 | 800 | 2 | 800 | 20 500 | 49 | 12 000 | 24 | 45 | 20 | 23 |
| 7 | 2 | 800 | 10 | 4 000 | 308 000 | 3 | 18 000 | 16 | >3000 | 70 | 7 |
| 8 | 6 | 2 400 | 6 | 2 400 | 10 000 | 100 | 1200 | 237 | 20 | <10 | >46 |
| 9 | 10 | 4 000 | 2 | 800 | 9000 | 111 | 280 | 1014 | <10 | 10 | 46 |
| 10 | 10 | 4 000 | 10 | 4 000 | 3000 | 333 | <10 | >28 000 | <10 | 25 | 18 |

Ces essais hors invention démontrent l'efficacité d'un mouillage des grains de blé au moyen d'une solution aqueuse contenant de l'acide propionique, et plus encore d'une solution aqueuse contenant de l'acide propionique et de l'acide acétique.

A dose élevée, l'acide propionique a un effet sensible sur les propriétés organoleptiques du blé. De préférence, la quantité d'acide propionique est inférieure à 2 400 ml par tonne de blé. De préférence, on ajoute à l'eau de mouillage environ 2 400 ml d'acide propionique et 2 400 ml d'acide acétique par tonne de blé.

Bien entendu, l'invention n'est pas limitée aux modes de réalisation décrits.

En particulier la mise en oeuvre du procédé n'est pas limitée au traitement du blé. Tous les grains utilisés par l'industrie agroalimentaire peuvent être décontaminés au moyen du procédé selon l'invention, en particulier le maïs, le seigle, l'orge, l'avoine, le riz, les fèves.

Le procédé est particulièrement adapté pour être mis en oeuvre lors d'étape d'humidification de grains précédant leur broyage. Avantageusement, l'investissement nécessaire est alors très réduit. Le procédé pourrait cependant également être mis en oeuvre à d'autres étapes.

Le procédé peut également être mis en oeuvre hors invention pour entretenir l'hygiène de l'installation de traitement et de transformation des grains, en particulier l'hygiène du moulin. A cette fin, on applique systématiquement une dose d'agent décontaminant sur les grains destinés à entrer en contact avec les appareils concernés, la dose étant déterminée en fonction du niveau de décontamination souhaité.

## Revendications

1.   Procédé de conditionnement de grains, notamment de grains de blé, comportant successivement une étape de mouillage des grains et une étape de repos, **caractérisé en ce que**, pendant l'étape de mouillage, on mouille les grains au moyen d'une solution de décontamination, comportant au moins un agent décontaminant qui est l'acide acétique, ledit agent décontaminant étant présent dans la solution de décontamination à une concentration supérieure à 5% (v/v) et inférieure à 20% (v/v) ;

la solution de décontamination comportant en outre un agent oxydant choisi parmi l'acide peracétique, le peroxyde d'hydrogène et un mélange de ceux-ci, la quantité d'acide peracétique étant supérieure à 0,06 l/tonne de grains et inférieure à 0,6 l/tonne de grains;

lesdits grains et ladite solution de décontamination étant maintenus en contact durant l'étape de repos pendant une durée supérieure à 8 heures.

2.   Procédé selon la revendication 1, **caractérisé en ce que** ladite solution de décontamination comporte au moins 0,5 litre dudit agent décontaminant par tonne de grains.

3.   Procédé selon l'une des revendications précédentes, **caractérisé en ce que** ladite solution de décontamination comporte au moins 3,6 millilitres dudit agent décontaminant par mètre carré de surface desdits grains.

4.   Procédé selon l'une des revendications 1 à 3, **caractérisé en ce que** ladite solution de décontamination comporte au moins 3 litres dudit agent décontaminant par tonne de grains.

5.   Procédé selon la revendication 1, **caractérisé en ce que** la quantité d'acide peracétique est supérieure à 0,15 l/tonne de grains.

6.   Procédé selon la revendication 1, **caractérisé en ce que** la quantité d'acide peracétique est supérieure à 1,1 ml/m$^2$ de grains.

7.   Procédé selon l'une quelconque des revendications 1 à 6, **caractérisé en ce que** la quantité de peroxyde d'hydrogène est supérieure à 0,5 l/tonne de grains.

8.   Procédé selon l'une quelconque des revendications précédentes, **caractérisé en ce que** lesdits grains sont mis en contact avec de l'ozone.

## Patentansprüche

1.   Verfahren zum Konditionieren von Getreidekörnern, insbesondere von Weizenkörnern, das nacheinander einen Schritt des Befeuchtens der Getreidekörner und einen Schritt des Ruhens umfasst, **dadurch gekennzeichnet, dass** die Getreidekörner während des Schrittes des Befeuchtens mittels einer Dekontaminationslösung befeuchtet werden, die mindestens ein Dekontaminationsmittel umfasst, das Essigsäure ist, wobei das Dekontaminationsmittel in der Dekontaminationslösung in einer Konzentration von größer als 5% (v/v) und kleiner als 20% (v/v) vorhanden ist, wobei die Dekontaminationslösung ferner ein Oxidationsmittel umfasst, das aus Peressigsäure, Wasserstoffperoxid und einer Mischung dieser ausgewählt wird, wobei die Menge an Peressigsäure größer als 0,06 l/Tonne Getreidekörner und kleiner als 0,6 l/Tonne Getreidekörner ist, wobei die Getreidekörner und die Dekontaminationslösung während des Schrittes des Ruhens während einer Dauer von länger als 8 Stunden in Kontakt gehalten werden.

2. Verfahren gemäß Anspruch 1, **dadurch gekennzeichnet, dass** die Dekontaminationslösung mindestens 0,5 Liter des Dekontaminationsmittels pro Tonne Getreidekörner umfasst.

3. Verfahren gemäß einem der vorhergehenden Ansprüche, **dadurch gekennzeichnet, dass** die Dekontaminationslösung mindestens 3,6 Milliliter des Dekontaminationsmittels pro Quadratmeter Fläche der Getreidekörner umfasst.

4. Verfahren gemäß einem der Ansprüche 1 bis 3, **dadurch gekennzeichnet, dass** die Dekontaminationslösung mindestens 3 Liter des Dekontaminationsmittels pro Tonne Getreidekörner umfasst.

5. Verfahren gemäß Anspruch 1, **dadurch gekennzeichnet, dass** die Menge an Peressigsäure größer als 0,15 l/Tonne Getreidekörner ist.

6. Verfahren gemäß Anspruch 1, **dadurch gekennzeichnet, dass** die Menge an Peressigsäure größer als 1,1 ml/m$^2$ Getreidekörner ist.

7. Verfahren gemäß irgendeinem der Ansprüche 1 bis 6, **dadurch gekennzeichnet, dass** die Menge an Wasserstoffperoxid größer als 0,5 l/Tonne Getreidekörner ist.

8. Verfahren gemäß irgendeinem der vorhergehenden Ansprüche, **dadurch gekennzeichnet, dass** die Getreidekörner mit Ozon in Kontakt gebracht werden.

**Claims**

1. Process for conditioning grains, in particular wheat grains, successively comprising a stage of wetting the grains and a resting stage, **characterized in that**, during the wetting stage, the grains are wetted by means of a decontaminating solution comprising at least one decontaminating agent which is acetic acid, said decontaminating agent being present in the decontaminating solution at a concentration greater than 5% (v/v) and inferior to 20% (v/v); the decontaminating solution further comprising an oxidizing agent chosen from peracetic acid, hydrogen peroxide and a mixture of these, the amount of peracetic acid being greater than 0.06 l/tonne of grains and less than 0.6 l/tonne of grains; said grains and said decontaminating solution being kept in contact during the resting stage for a period of time of greater than 8 hours.

2. Process according to claim 1, **characterized in that** said decontaminating solution comprises at least 0.5 liter of said decontaminating agent per tonne of grains.

3. Process according to one of the preceding claims, **characterized in that** said decontaminating solution comprises at least 3.6 milliliters of said decontaminating agent per square meter of surface area of said grains.

4. Process according to any one of claims 1 to 3, **characterized in that** said decontaminating solution comprises at least 3 liters of said decontaminating agent per tonne of grains.

5. Process according to claim 1, **characterized in that** the amount of peracetic acid is greater than 0.15 l/tonne of grains.

6. Process according to claim 1, **characterized in that** the amount of peracetic acid is greater than 1.1 ml/m$^2$ of grains.

7. Process according to any one of claims 1 to 6, **characterized in that** the amount of hydrogen peroxide is greater than 0.5 l/tonne of grains.

8. Process according to any one of the preceding claims, **characterized in that** said grains are brought into contact with ozone.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6086935 A
- WO 0143566 A